# EUROPÄISCHE PATENTSCHRIFT

(11) **EP 0 558 885 B1**
(45) Veröffentlichungstag und Bekanntmachung des Hinweises auf die Patenterteilung: **07.04.1999**
(21) Anmeldenummer: 93100175.4
(22) Anmeldetag: 08.01.1993
(51) Int. Cl.: B23D 47/08, B23Q 5/04, F16C 3/28, B24B 23/03

(54) **Handwerkzeugmaschine, insbesondere Handkreissäge**
Portable machine tool, in particular, portable hand-operated circular saw
Machine-outil portative, en particulier scie circulaire portative à main

(30) Priorität: 31.01.1992 DE 4202724
(43) Veröffentlichungstag der Anmeldung: 08.09.1993
(73) Patentinhaber: ROBERT BOSCH GMBH, 70442 Stuttgart (DE)
(72) Erfinder: Bleicher, Manfred, W-7022 Leinfelden-Echterdingen 1 (DE); Bohne, Ulrich, Dipl.-Ing. (FH), W-7441 Kohlberg (DE)

(56) Entgegenhaltungen:
- EP-A- 0 254 850
- EP-A- 0 329 915
- DE-A- 3 435 454
- DE-A- 3 933 261
- DE-B- 1 023 947
- DE-U- 8 513 383
- FR-A- 2 080 389
- GB-A- 261 179
- US-A- 3 550 324

## Beschreibung

### Stand der Technik

Die Erfindung geht aus von einer Handwerkzeugmaschine, insbesondere Handkreissäge, nach der Gattung des Hauptanspruchs.

Es ist eine Handwerkzeugmaschine dieser Art bekannt (DE-OS 34 35 454), bei der die Exzentervorrichtung über ein Stirnradgetriebe von der das Werkzeug, insbesondere das Sägeblatt, tragenden Welle angetrieben wird. Das eine, dem Hubantrieb des Hubgliedes dienende Zahnrad ist drehfest mit einem das Ende des Hubgliedes lagernden Exzenterrad verbunden und auf einer mit beiden Enden im Gehäuse befestigten Lagerachse drehbar gelagert. Die Exzentrizität des Exzenterrades bestimmt den Hub des Hubgliedes und damit den Pendelhub. In der Ausgestaltung als Handkreissäge ergibt sich bei dieser somit eine oszillierende Vorschubbewegung, die dem Sägeblatt überlagert wird. Dadurch verbessert sich der Sägefortschritt ohne Anderung der Motorleistung. Im Gegensatz zu einem exzentrisch gelagerten oder z.B. ovalen Sägeblatt ist hierbei die Frequenz der Vorschubbewegung von der Sägeblattdrehzahl verschieden, so daß sich eine gleichmäßige Abnutzung der Zähne ergibt. Erreicht wird somit eine größere Vorschubgeschwindigkeit bei gleicher Vorschubkraft bzw. eine reduzierte Vorschubkraft bei hoher Vorschubgechwindigkeit. Trotz erheblicher Vorteile ist bei dieser bekannten Handwerkzeugmaschine nachteilig, daß der Antrieb der Exzentervorrichtung über das Stirnradgetriebe zu einem relativ kleinen Achsabstand zwischen der Wellenachse und der Achse der Exzentervorrichtung zwingt, wodurch der Bereich der Exzentervorrichtung schlecht zugänglich ist.

### Vorteile der Erfindung

Die erfindungsgemäße Handwerkzeugmaschine, insbesondere Handkreissäge, mit den kennzeichnenden Merkmalen des Anspruch 1 hat demgegenüber den Vorteil, daß aufgrund des Zugmittelgetriebes, das prinzipiell beliebig gestaltet sein kann, ein größerer Achsabstand zwischen der Wellenachse einerseits und der Achse der Exzentervorrichtung andererseits möglich ist, so daß also die Exzentervorrichtung in einem größeren, bedienungsfreundlichen Abstand zum Motorgehäuse plaziert werden kann, derart, daß sie für bestimmte Zwecke gut zugänglich ist, insbesondere auch von außen, für etwaige von der Bedienungsperson außen vorzunehmende Handhabungen oder dergleichen Manipulationen. Von Vorteil ist außerdem, daß ein Zugmittelgetriebe einfach, kostengünstig und kompakt ist und außerdem es in einfacher Weise ermöglicht, durch getriebliche Maßnahmen die Hubfrequenz des Hubgliedes von der Sägeblattdrehzahl verschieden zu gestalten.

Bei einer derartigen Handwerkzeugmaschine kommt es nicht darauf an, daß die Exzentervorrichtung vom motorischen Antrieb her, insbesondere von der das Werkzeug, insbesondere das Sägeblatt, tragenden Welle her, angetrieben wird; denn es ist auch ein Fremdantrieb der Exzentervorrichtung im Rahmen der Erfindung möglich. Eine derartige Handwerkzeugmaschine nach der Gattung des Anspruchs 1, wie sie - abgesehen vom Antrieb der Exzentervorrichtung - aus der DE-OS 34 35 454 bekannt ist, hat einen durch die Exzentrizität der Exzentervorrichtung fest vorgegebenen Pendelhub. Dies kann mitunter nachteilig sein, insbesondere dann, wenn mit der Handwerkzeugmaschine, insbesondere Handkreissäge, solche Bearbeitungsaufgaben gelöst werden sollen, bei denen eine dem Drehantrieb überlagerte Pendelung entweder gar nicht oder nicht im vorhandenen Maße gewünscht wird.

Die erfindungsgemäße Handwerkzeugmaschine mit den kennzeichnenden Merkmalen des Anspruchs 1 hat demgegenüber den Vorteil, daß die Größe des Pendelhubes verstellbar ist zwischen einer Maximalstellung und einer Nullstellung, und zwar je nach Gestaltung stufenlos oder in Stufen, wobei bei Einstellung des Pendelhubes auf Null somit die Pendelwirkung ganz abschaltbar ist. Auf diese Weise läßt sich der Hub an die unterschiedlichsten Bearbeitungsaufgaben anpassen, womit der Anwendungsbereich der Handwerkzeugmaschine erheblich erweitert wird. Aufgrund der ermöglichten Hubverstellung ist somit eine Abschaltung oder Zuschaltung der Pendelung möglicht, wobei sich die zwei Extremwerte, nämlich Nullhub und Maximalhub, und zwischen diesen mehrere Stufen oder ein stufenloser Bereich für Zwischenstellungen ergeben. Dabei lassen sich alle Voraussetzungen dafür erfüllen, den jeweils eingestellten Hub von außen gut ablesbar zu machen, sowie eine gute Zugänglichkeit des von außen zu handhabenden Elements, mittels dessen die Verstellung des Pendelhubes zu bewerkstelligen ist, zu bieten. Dabei kann es von besonderem Vorteil sein, die Maßnahmen nach den Ansprüchen 1 und 11 zusammen zu verwirklichen, da dann die durch ein Zugmittelgetriebe erreichten Vorteile eines möglichen größeren Abstandes zwischen der Wellenachse und der Exzentervorrichtung dazu besonders genutzt werden können, eine gute Zugänglichkeit eines Verstellelements zur Verstellung des Pendelhubes in einem bedienungsfreundlichen Abstand zum Motorgehäuse zu verwirklichen. Es versteht sich, daß die Maßnahme der Verstellbarkeit des Hubes bei den verschiedensten Handwerkzeugmaschinen zur Anwendung kommen kann, und zwar immer dort, wo eine Verstellung des Hubes bei radialem Umlauf gefordert wird. Durch die Verstellbarkeit des Hubes sind bei einer Handwerkzeugmaschine, insbesondere Handkreissäge, alle Möglichkeiten einer normalen Handwerkzeugmaschine, die keinen Pendelbetrieb hat, mit den Vorteilen einer solchen mit Pendelung vereint, so daß bei gewünschtem Pendelbetrieb die dadurch erreichten Vorteile eines höheren Sägefortschritts oder geringerer Andruckkraft genutzt werden können und bei nicht gewünschter Pendelung der Pendelhub auf Null gestellt werden kann und die Handwerkzeugmaschine dann wie eine solche ohne Pendelbetrieb gehandhabt werden kann. Dadurch ist der Handhabungsbereich erheblich erweitert.

Durch die Merkmale im Anspruch 1 ist außerdem sichergestellt, daß sich der jeweils eingestellte Hub im Betrieb nicht selbständig verstellen kann. Damit kann der Forderung nach möglichst kleiner und leichter Bauweise bei geringen bewegten Massen besonders gut entsprochen werden.

Durch die Merkmale des Anspruchs 1 ist außerdem ein einfaches Verstellprinzip für die verstellbare Exzenterwelle verwirklicht. Die gesamte Exzentrizität ist dabei auf zwei Hülsen aufgeteilt, nämlich die eine Innenhülse bildende Exzenterwelle einerseits und das eine Außenhülse bildende Exzenterrad andererseits, wobei diese Hülsen ineinandergesteckt auf einer zentrischen Lagerachse sitzen. Die Bohrung der die Exzenterwelle bildenden inneren Hülse hat zur Außenkontur einen Achsversatz von der Größe z.B. der halben Exzentrizität, was einem Viertel des Maximalhubes entspricht. Die Bohrung des die Außenhülse bildenden Exzenterrades hat zur Außenkontur ebenfalls einen Achsversatz von z.B. der Größe der halben Exzentrizität, was einem Viertel des Maximalhubes entspricht. Verdreht man beide ineinandergesteckte Hülsen gegeneinander, so läßt sich in einfacher Weise ein Hub zwischen Null und Maximum einstellen. Diese Anordnung der ineinandergesteckten, jeweils exzentrischen Hülsen in Form der Exzenterwelle und des Exzenterrades ist besonders kompakt, platzsparend und wirksam.

Durch die in den Unteransprüchen 2 bis 10 aufgeführten Maßnahmen sind vorteilhafte Weiterbildungen und Verbesserungen der im Anspruch 1 angegebenen Handwerkzeugmaschine, insbesondere Handkreissäge, möglich.

Durch die in den übrigen Ansprüchen 11 bis 38 aufgeführten Maßnahmen sind vorteilhafte weitere Ausgestaltungen und Verbesserungen der Handwerkzeugmaschine nach Anspruch 1 möglich.

Es liegt im Rahmen der Erfindung, die Verstellbarkeit des Hubgliedes durch konstruktive Maßnahmen am Hubglied selbst zu erreichen. Statt dessen ist dies auch durch die Merkmale des Anspruchs 11 verwirklichbar, wodurch eine besondes einfache, kompakte, platzsparende und kostengünstige Anordnung mit verstellbarer Exzentrizität und damit verstellbarem Hub ermöglicht ist.

Durch die Merkmale des Anspruchs 14 ist gewährleistet, daß sich der jeweils eingestellte Hub im Betrieb nicht selbständig verstellen kann, wobei andererseits eine Verstellbarkeit von Hand durch Überwinden der Hemmvorrichtung relativ leicht möglich ist. Die Hemmvorrichtung schafft die Möglichkeit, daß es zur manuellen Hubverstellung nur einen geringen Betätigungskraft bedarf.

Durch die Merkmale des Anspruchs 19 ist es möglich gemacht, eine Hubverstellung lediglich durch Drehbetätigung der Exzenterwelle vorzunehmen, wobei das federbelastete Rastglied, insbesondere die Kugel, selbsttätig in der hergestellten Exzentereinstellung einrastet und diese sichert. Zu Verstellzwecken ist die Exzenterwelle mit einer außerhalb des Gehäuses liegenden Handhabe, z.B. einem Handgriff, Verstellrad od.dgl., versehen.Die Handhabe ist von außen gut zugänglich und ohne großen Kraftaufwand betätigbar. Der jeweils eingestellte Hub ist in diesem Bereich von außen gut ablesbar, z.B. anhand einer Bezugskala zwischen dem Exzenterrad und der an der Exzenterwelle angreifenden Handhabe.

Durch die Merkmale im Anspruch 28, insbesondere im Anspruch 29, ist eine besonders kompakte Bauweise durch einseitige fliegende Lagerung der Exzentervorrichtung auf dem Tragabschnitt der Lagerachse erreicht. Es ist eine kostengünstige Lagerung z.B. mittels Nadellagern möglich, wobei im übrigen die gesamte Anordnung nicht mit irgendwelchen Axialkräften belastet ist.

Durch die Merkmale des Anspruchs 32 ist eine stufenlose Verstellung des Pendelhubes möglich. Zur Verstellung muß das von der Hemmvorrichtung aufgebrachte Reibmoment an einem äußeren Betätigungsglied von Hand aufgebracht und überwunden werden. Für das Reibmoment gelten zwei Grenzen. Es darf nicht größer sein als das Reibmoment, das vom Motor und Getriebe auf die Exzentervorrichtung übertragen wird, damit eine Verstellung des Hubes von Hand noch möglich ist. Andererseits muß das Reibmoment groß genug sein, um eine selbsttätige Verstellung der Exzentervorrichtung durch die Kraft des Hubgliedes im Betrieb zu verhindern.

Durch die Merkmale im Anspruch 35 und insbesondere Anspruch 36 ist erreicht, daß die von der axial wirkenden Feder aufgebrachte Axialkraft über den radialen Anschlag wieder in die Exzenterwelle geleitet wird und somit keine Axialkräfte auf das Gehäuse übertragen werden.

### Zeichnung

Die Erfindung ist nachfolgend anhand von in den Zeichnungen gezeigten Ausführungsbeispielen näher erläutert. Es zeigen:
- Fig. 1: eine schematische Seitenansicht einer Handkreissäge gemäß einem ersten Ausführungsbeispiel,
- Fig. 2: einen schematischen Schnitt entlang der Linie II-II in Fig. 1,
- Fig. 3: eine Einzelheit von Fig. 2 in demgegenüber größerem Maßstab,
- Fig. 4: einen schematischen Schnitt entlang der Linie IV-IV in Fig. 3,
- Fig. 5: einen schematischen axialen Längsschnitt eines Teiles einer Handkreissäge gemäß einem zweiten Ausführungsbeispiel,
- Fig. 6: einen schematischen Schnitt entlang der Linie VI-VI in Fig. 5,
- Fig. 7: einen schematischen axialen Längsschnitt eines Teiles einer Handkreissäge gemäß einem dritten Ausführungsbeispiel,
- Fig. 8 und 9: jeweils einen schematischen Schnitt entlang der Linie VIII-VIII in Fig. 7, und zwar in der Stellung "Maximalhub" bzw. "Nullhub".

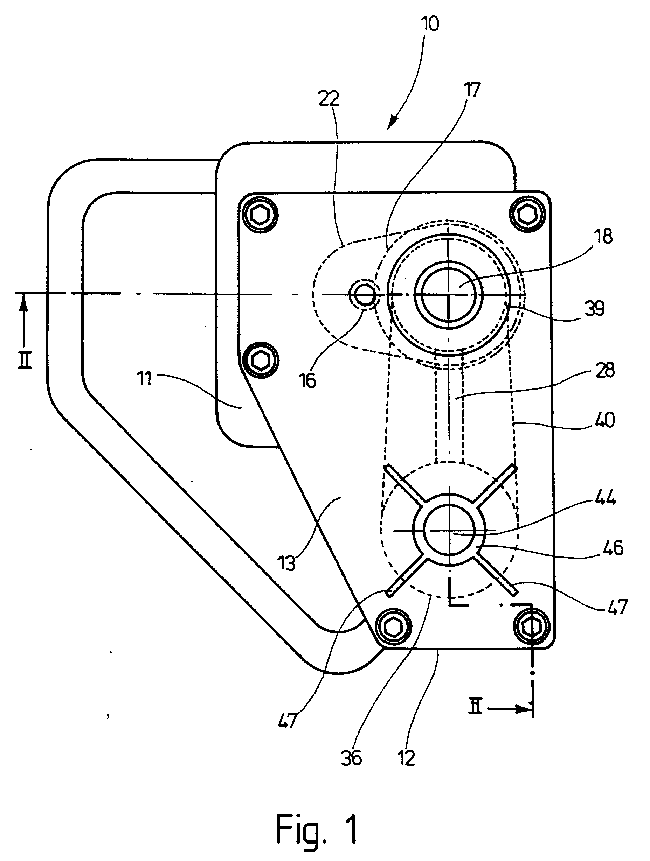

In Fig. 1 bis 4 ist ein erstes Ausführungsbeispiel einer Handwerkzeugmaschine, in der Ausbildung als Handkreissäge 10, gezeigt, die einige Elemente der Handkreissäge gemäß DE-OS 34 35 454 enthält, auf die hier ausdrücklich zur Vermeidung unnötiger Wiederholungen solcher Teile, die aus dieser genannten Druckschrift ersichtlich sind, Bezug genommen ist. Die Handkreissäge 10 hat ein nur schematisch gezeigtes Motorgehäuse 11 und Getriebegehäuse 12, das mittels eines Deckels 13 abgeschlossen ist. Die Handkreissäge 10 weist einen motorischen Antrieb auf, der der besseren Übersicht wegen nicht im Detail gezeigt ist. Teil des motorischen Antriebs ist eine mittels eines Lagers 14 im Getriebegehäuse 12 gelagerte Motorwelle 15 eines nicht weiter gezeigten Motors, insbesondere Elektromotors. Die Motorwelle 15 hat endseitig ein Ritzel 16, das in ein Zahnrad 17 zum Antrieb einer Welle 18 eingreift, die hier bei der Ausbildung als Handkreissäge 10 die Sägeblattwelle bildet. Auf der Welle 18 ist an einem Ende ein Sägeblatt 19, insbesondere Kreissägeblatt, mittels einer nicht weiter gezeigten Spannvorrichtung festgespannt. Die Welle 18 ist mittels eines Kugellagers 20 und z.B. mittels eines Nadellagers 21 in einer Ü-förmigen Schwinge 22 gelagert. Die Schwinge 22 ist ihrerseits um eine zur Achse der Welle 18 etwa parallele Achse 23 schwenkbar gelagert, und zwar einerseits mittels eines im Deckel 13 gehaltenen Bolzens 24 und andererseits mit Hilfe des Lagers 14, auf dessen Außenring die Schwinge 22 mit dem dem Lager 14 benachbarten Teil aufsitzt. Im Deckel 13 ist ein ausreichend groß bemessener Durchbruch 25 für den Durchlaß der Welle 18 mit einem dortigen Teil der Schwinge 22 gebildet.

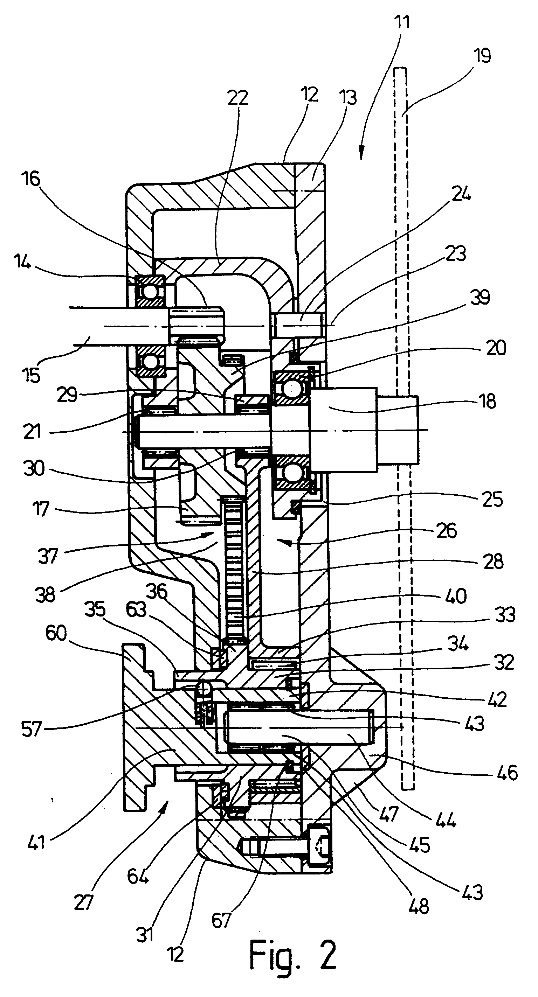

An der Welle 18 greift eine Hubeinrichtung 26 an, mittels der die Schwinge 22 und somit die Welle 18 um die Achse 23 pendelnd bewegbar ist. Die Hubeinrichtung 26 weist eine vom motorischen Antrieb 15, 16, insbesondere von der Welle 18 her, antreibbare Exzentervorrichtung 27 und ein etwa pleuelförmiges Hubglied 28 auf, welches mit dem in Fig. 2 oberen, augenförmigen Ende 29 über ein Nadellager 30 an der Welle 18 angreift. Das Hubglied 28 wird von der Exzentervorrichtung 27 betätigt und arbeitet zur Schwenkbetätigung der Schwinge 22 auf die Welle 18. Dazu wird das Hubglied 28 mit einer von der Drehzahl der Welle 18 verschiedenen Frequenz angetrieben, was für eine gleichmäßige Abnutzung des Sägeblattes 19 von besonderer Bedeutung ist und in der genannten DE-OS 34 35 454 im Detail beschrieben ist.

Die Exzentervorrichtung 27 weist ein Exzenterrad 31 auf, auf dessen Axialabschnitt 32 das Hubglied 28 mit seinem anderen, in Fig. 2 unteren, ebenfalls augenförmigen Ende 33 mittels eines Nadellagers 34 drehbar gelagert ist. In Axialrichtung schließt sich an den Axialabschnitt 32 eine damit einstückige Hülse 35 und zwischen der Hülse 35 und dem Axialabschnitt 32 eine damit einstückige Riemenscheibe 36 an, die hier als Zahnriemenscheibe ausgebildet ist. Die Riemenscheibe 36 ist Teil eines Zugmittelgetriebes 37, das hier als Riemengetriebe 38, insbesondere Zahnriemengetriebe, ausgebildet ist und einerseits mit dem motorischen Antrieb, der dem Antrieb des Sägeblattes 19 dient, und andererseits über die Riemenscheibe 36 mit der Exzentervorrichtung 27 getrieblich verbunden ist. Dieses Zugmittelgetriebe 37 kann prinzipiell in beliebiger getrieblicher Weise über die Motorwelle 15 und deren Ritzel 16 zur Herbeiführung eines Drehantriebes des Exzenterrades 31 angetrieben werden. Beim gezeigten ersten Ausführungsbeispiel ist das Zugmittelgetriebe 37 mit der Welle 18 getrieblich verbunden und wird von dieser mit einer von der Drehzahl der Welle 18 abweichenden Drehzahl angetrieben. Hierzu ist auf der Welle 18 eine Riemenscheibe 39, insbesondere Zahnriemenscheibe, angeordnet, über die ein geschlossener Riemen 40, insbesondere Zahnriemen, hinweggeführt ist, der in gleicher Weise mit der anderen Riemenscheibe 36 getrieblich gekoppelt ist. Die Riemenscheibe 39 insbesondere Zahnriemenscheibe, ist mit dem Zahnrad 17, das dem Antrieb der Welle 18 dient, fest verbunden, insbesondere damit einstückig, was besonders kostengünstig ist. Dadurch, daß der Durchmesser der Riemenscheibe 39, insbesondere die Zähnezahl dieser, abweicht von demjenigen bzw. derjenigen des Zahnrades 17, ist sichergestellt, daß das Zugmittelgetriebe 37, insbesondere Riemengetriebe 38, von der Welle 18 mit einer solchen Drehzahl angetrieben wird, die von der Wellendrehzahl abweicht.

Bei einem anderen, nicht gezeigten Ausführungsbeispiel ist statt des erläuterten Zahnriemengetriebes ein Riemengetriebe mit Reibriemen vorgesehen. Bei einem anderen, nicht gezeigten Ausführungsbeispiel ist als Zugmittelgetriebe 37 statt dessen ein Kettengetriebe oder auch eine andere Form eines Zugmittelgetriebes vorgesehen.

Wird die Welle 18 und mit dieser das Sägeblatt 19 in einer Drehrichtung von der Motorwelle 15 her mit Ritzel 16 und über das Zahnrad 17 angetrieben, so wird gleichermaßen über die Riemenscheibe 39 und den Riemen 40 auch das Exzenterrad 31 angetrieben, dessen Riemenscheibe 36 mit dem Riemen 40 in Eingriff steht. Dadurch ergibt sich hinsichtlich des exzentrisch angeordneten Außendurchmessers des Exzenterrades 31 und des darauf gelagerten Hubgliedes 28 eine Hubbewegung, die aufgrund der Schwinge 22 in eine Pendelbewegung dieser um die Achse 23 umgesetzt wird, wobei die Frequenz der Hubeinrichtung 26 verschieden ist von der Drehzahl, mit der die Welle 18 rotiert. Das Hubglied 28 bildet zugleich ein Abstandsglied, über das der Abstand des Exzenterrades 31, insbesondere der Riemenscheibe 36 daran, von der Längsachse der Welle 18, insbesondere von der Riemenscheibe 39, vorgegeben und konstant gehalten wird. Das Hubglied 28 sorgt für eine konstante Spannung des Riemens 40.

Diese Ausbildung der Hubeinrichtung 26 hat den Vorteil, daß ein größerer Achsabstand zwischen der Längsachse der Welle 18 und der Exzentervorrichtung 27, insbesondere dem Exzenterrad 31, gewählt werden kann. Dies wiederum verbessert die Zugänglichkeit zur Exzentervorrichtung 27, insbesondere zu Teilen dieser, die später noch näher erläutert sind. Insgesamt ergibt sich dadurch ein der erleichterten Handhabung und Bedienung dienender größerer Abstand zum Motorgehäuse 11. Außerdem hat dieses Zugmittelgetriebe 37 den Vorteil, daß es einfach und kostengünstig ist.

Eine weitere wesentliche Besonderheit der dargestellten Handkreissäge 10 liegt darin, daß der Hub des Hubgliedes 28 zwischen einer Nullstellung, die einem Hub Null und einem abgeschalteten Pendelantrieb entspricht, und einer vorgegebenen Maximalstellung, die einem Maximalhub und einem auf maximalen Pendelwinkel zugeschalteten Pendelantrieb entspricht, verstellbar ist. Dies ist bei einem nicht gezeigten Ausführungsbeispiel durch eine Verstellbarkeit des Hubgliedes 28 erreicht.

Beim gezeigten Ausführungsbeispiel ist zu diesem Zweck die Exzentervorrichtung 27 in beschriebener Weise zwischen einer Nullstellung und einer Maximalstellung verstellbar ausgebildet. Dabei ist die jeweilige Exzentereinstellung der Exzentervorrichtung 27 kraftschlüssig und/oder formschlüssig sicherbar, so daß sich diese während des Betriebes der Handkreissäge 10 nicht verändern kann.

Die Exzentervorrichtung 27 weist eine Exzenterwelle 41 auf, die zumindest auf einem Längenabschnitt 42 als Hohlwelle ausgebildet ist und in diesem Bereich mittels z.B. Nadellagern 43 auf einer Lagerachse 44 einseitig, in sogenannter fliegender Lagerung, drehbar gelagert ist. Die Lagerachse 44 ist mit einem Ende, und zwar auf einem relativ großen axialen Längenabschnitt, im Getriebegehäuse 12, insbesondere im Deckel 13, fest gehalten,z.B. eingepreßt, und steht vom Deckel 13 mit einem Tragabschnitt 45 frei ab, auf dem die Nadellager 43 für die Drehlagerung der Exzenterwelle 41 sitzen. Die der Aufnahme der Lagerachse 44 im Deckel 13 dienenden, etwa kappenförmigen Wandungsteile 46 sind über radiale Stege 47 versteift. Diese einseitige, fliegende Lagerung ist platzsparend und kostengünstig. In den Deckel 13 ist auf der dem Längenabschnitt 42 der Exzenterwelle 41 zugewandten Seite eine Scheibe 48 eingelegt, die als axiales Gleitlager dienen kann.

Das beschriebene Exzenterrad 31 ist auf der Exzenterwelle 41 aufgesetzt. Die Exzenterwelle 41 ist zur Verstellung des Hubes drehverstellbar. Der Außendurchmesser des Exzenterrades 31 weist in bezug auf seine Bohrung einen radialen Achsversatz, also eine Exzentrizität, auf. Dieser kann z.B. ein Viertel des Maximalhubes betragen. Auch der Außendurchmesser der Exzenterwelle 41 ist in bezug auf deren Innendurchmesser in Radialrichtung achsversetzt, daß heißt mit Exzentrizität versehen,z.B. auch um ein Viertel des Maximalhubes.

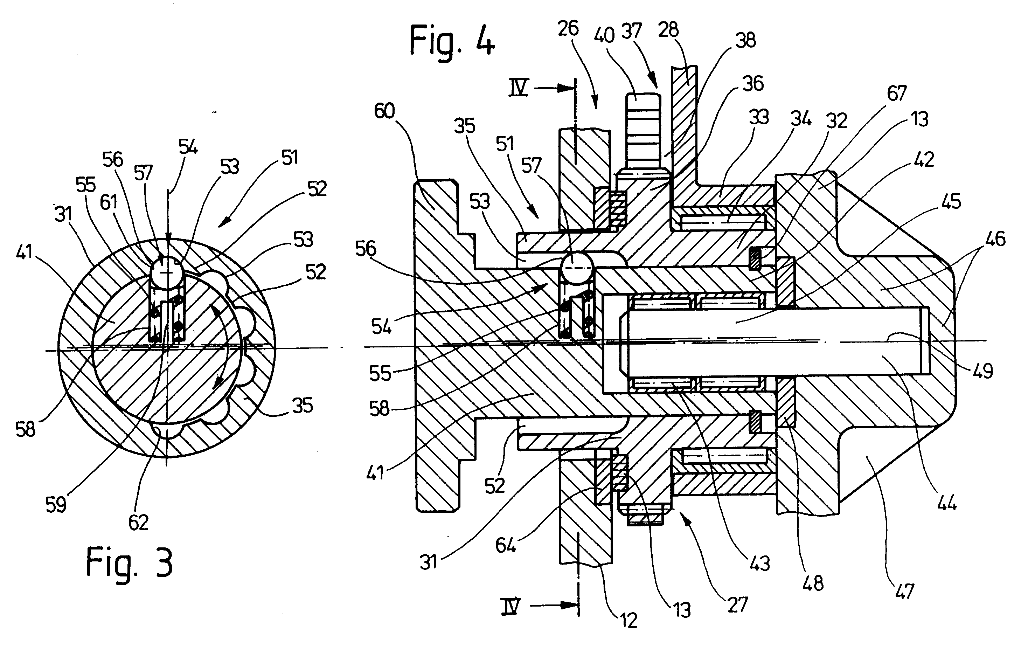

Zwischen der Exzenterwelle 41 und dem Exzenterrad 31 ist eine kraftschlüssig und/oder formschlüssig wirkende, zur Verstellung der Exzentrizität durch Relativverschiebung zwischen der Exzenterwelle 41 und dem Exzenterrad 31 überwindbare Hemmvorrichtung 51 angeordnet, die nachfolgend insbesondere anhand von Fig. 3 und 4 näher erläutert ist. Generell weist die Hemmvorrichtung 51 jeweils ineinandergreifende Vorsprünge bzw. Vertiefungen auf. Beim gezeigten ersten Ausführungsbeispiel sind die Vertiefungen bzw. Vorsprünge generell aus radial abstehenden Stegen 52 und Nuten 53 zwischen benachbarten Stegen 52 gebildet. Die radial abstehenden Stege 52 und Nuten 53 zwischen zwei benachbarten Stegen 52 sind hier im Inneren der Hülse 35 des Exzenterrades 31 vorgesehen und axial verlaufend gestaltet. Das Exzenterrad 31 stellt mit sämtlichen beschriebenen Elementen ein einstückiges, auf diese Weise kostengünstiges und präzis herstellbares Teil dar.

Den Stegen 52 bzw. Nuten 53 der Hülse 35 ist zumindest ein ebenfalls radial abstehender Vorsprung 54 an der Exzenterwelle 41 zugeordnet. Der Vorsprung 54 steht radial über und ist so dimensioniert und ausgebildet, daß er jeweils in eine Nut 53 der Hülse 35 formschlüssig eingreifen kann, wie in Fig. 3 und 4 gezeigt ist. Der mindestens eine Vorsprung 54 befindet sich auf dem Bereich der Exzenterwelle 41, der die Hülse 35 axial durchsetzt, und dabei im Bereich der Stege 52 und Nuten 53. Beim ersten Ausführungsbeispiel gemäß Fig. 1 bis 4 ist dieser mindestens eine Vorsprung 54 aus einem in Radialrichtung nach außen mittels einer Feder 55 federbelasteten und gegensinnig dazu eindrückbaren und außer Eingriff mit der Nut 53 bringbaren Rastglied 56 gebildet, das hier mit Vorzug aus einer Kugel 57 besteht. Das Rastglied 56, insbesondere die Kugel 57, und ferner die Feder 55 sind in einer radialen Ausnehmung 58, z.B. Bohrung, der Exzenterwelle 41 gehalten, wobei der Durchmesser der Ausnehmung 58 zumindest so groß wie derjenige der Kugel 57 gewählt ist, damit letztere beim radialen Eindrücken zumindest auf einem Teil des Radialweges in die Ausnehmung 58 hinein und außer Eingriff mit einer Nut 53 gelangen kann. Die radiale Ausnehmung 58 weist einen die Eindrücktiefe des Rastgliedes 56, insbesondere der Kugel 57, begrenzenden inneren Anschlag 59, z.B. eingesetzten oder einstückigen Stift, auf. Dadurch ist gewährleistet, daß bei der Drehverstellung der Exzenterwelle 41 keine solche über den vorgesehenen Verstellbereich hinaus erfolgen kann. Der vorgesehene Verstellbereich ist durch die Stege 52 und Nuten 53 vorgegeben, die sich etwa auf einem Umfangswinkelbereich von 180° der Hülse 35 befinden. Nur über diesen Bereich ist eine Verstellung möglich.

Aufgrund der erläuterten Gestaltung ist die Exzenterwelle 41 mittels Drehung, z.B. durch Angreifen an einem Handgriff 60 und Drehbetätigung im Uhrzeigersinn gemäß Fig. 3, relativ zum Exzenterrad 31 unter Überwindung der Hemmvorrichtung 51 drehverstellbar. Bei dieser Drehbetätigung wird das Rastglied 56, insbesondere die Kugel 57, gegen die Wirkung der Feder 55 in die Ausnehmung 58 zumindest soweit hineingedrückt, bis sie außer Eingriff mit der Nut 53 gelangt und sich z.B. am in Umfangsrichtung nächstfolgenden Steg 52 abstützt, so daß bei weiterer Drehbetätigung das Rastglied 56 dann in die nächstfolgende Nut 53 hinein ausweichen kann und dadurch diese relative Drehstellung zwischen der Exzenterwelle 41 und dem Exzenterrad 31 formschlüssig gesichert ist.

Wie insbesondere Fig. 3 zeigt, weist das Exzenterrad 31, insbesondere deren Hülse 35, zwei in Umfangswinkelabstand von etwa 180° angeordnete Endanschläge 61,62 auf, die durch Wandungsabschnitte der in Umfangsrichtung jeweils letzten Nuten 53 gebildet sind. In der in Fig. 4 gezeigten Stellung ist die eine Endanschlagstellung erreicht. Eine Drehverstellung der Exzenterwelle 41 im Gegenuhrzeigersinn über die letzte Nut 53 hinaus ist dadurch blockiert, daß dann das Rastglied 56, insbesondere die Kugel 57, radial am Anschlag 59 anstößt und nicht tiefer in die Ausnehmung 58 hineingedrückt werden kann, d.h. nicht so tief, daß sie völlig aus der Nut 53 heraustreten könnte.Damit eine ähnliche Blockierung nicht bei der gewünschten Drehverstellbarkeit z.B. im Uhrzeigersinn gemäß Fig. 3 geschieht, ist der Innendurchmesser der Hülse 35 auf dem Umfangsbereich, über den sich die Stege 52 und Nuten 53 erstrecken, zumindest geringfügig aber ausreichend größer als auf dem nicht genuteten übrigen Umfangsabschnitt bemessen. Dadurch kann das Rastglied 56, insbesondere die Kugel 57, bei der Drehverstellung im Uhrzeigersinn gemäß Fig. 3 an den radial nach innen gewandten Kopfflächen der jeweiligen Stege 52 vorbei in die nächstfolgende Nut 53 gelangen.

Die beschriebene Anordnung gemäß dem ersten Ausführungsbeispiel in Fig. 1 bis 4 hat den vorteil, daß eine axialkraftfreie Positionierung bei der Drehverstellung der Exzenterwelle 41 mit Hilfe der Kugel 57 erreichbar ist. Die Lagerung der Exzenterwelle 41 auf der gehäusefesten Lagerachse 44 mittels Nadellagern 43 ist kostengünstig und platzsparend. Dies gilt auch für das auf der exzentrischen Außenfläche der Exzenterwelle 41 unmittelbar aufsitzende Exzenterrad 31. Die Anordnung ist frei von Axialkräften.

Die erläuterte Exzentervorrichtung 27 dient in beschriebener Weise als Huberzeuger, um bei der Handkreissäge 10 den Pendelbetrieb zu ermöglichen und dann beliebige verschiedene Hubwege zu erzeugen, wobei ein Nullhub, das heißt kein Pendelbetrieb, und eine Verstellung bis hin zum Maximalhub möglich sind. Durch diese wahlweise einschaltbare Pendelung werden bei der beschriebenen Handkreissäge 10 alle Möglichkeiten einer normalen Handkreissäge, das heißt einer solchen ohne Pendelung, mit den Vorteilen einer Pendelung vereint, wobei der Benutzer je nach Bearbeitungsaufgabe die Wahl hat, ohne Pendelung oder mit Pendelung zu arbeiten. Dadurch wird der Anwendungsbereich einer Handkreissäge 10 sowie der Sägeblätter 19 aufgrund der beschriebenen Verstellbarkeit erheblich erweitert. Der Benutzer kann die Vorteile der Pendelung nutzen, die bekanntermaßen in höherem Sägefortschritt oder geringerer Andruckkraft liegen.

Auf der dem Hubglied 28 abgewandten Axialseite ist in der Riemenscheibe 36 ein Ring 63 aufgenommen, der aus elastischem Material, z.B. aus Filz od.dgl., besteht. An zugeordneter Stelle ist in der Wandung des Getriebegehäuses 12 eine Scheibe 64 enthalten, an der das Exzenterrad 31 axial z.B. mit dem Ring 63 anliegen kann, wobei der Ring 63 bei der Umlaufbewegung eine Abdichtung in diesem Bereich bewirken kann. Gegen relative Axialverschiebung des Exzenterrades 31 nach rechts sichert ein Anschlag 67, z.B. ein Anschlagring, auf der Exzenterwelle 41.

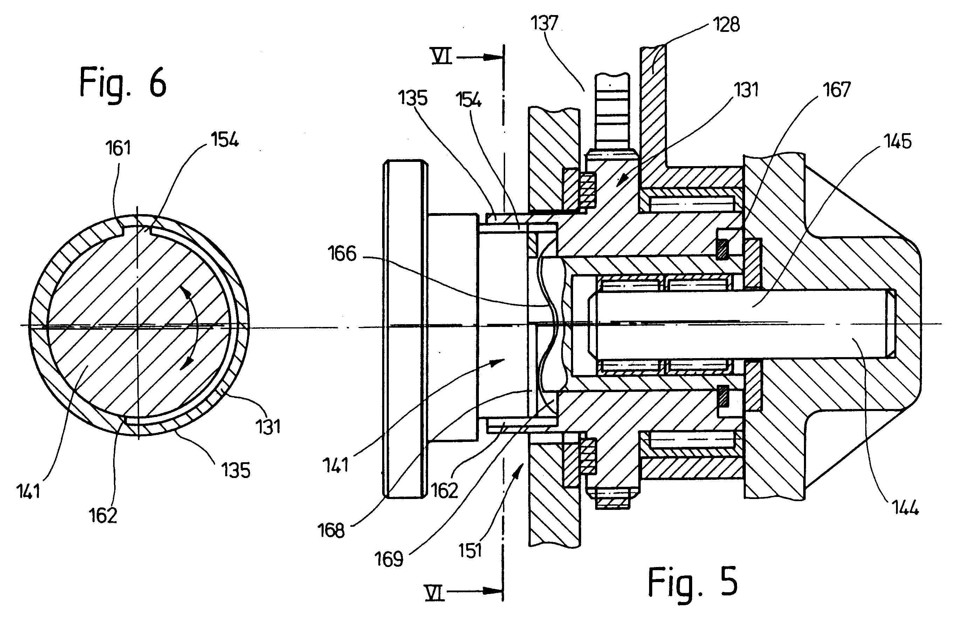

Bei dem in Fig. 5 und 6 gezeigten Ausführungsbeispiel sind für die Teile, die dem ersten Ausführungsbeispiel entsprechen, um 100 größere Bezugszeichen verwendet, so daß dadurch zur Vermeidung von Wiederholungen auf die Beschreibung des ersten Ausführungsbeispieles Bezug genommen ist.

Beim zweiten Ausführungsbeispiel erzeugt die Hemmvorrichtung 151, die zwischen dem Exzenterrad 131 und der drehverstellbaren Exzenterwelle 141 vorgesehen ist, ein Reibmoment zwischen Exzenterwelle 141 und Exzenterrad 131. Das Reibmoment ist dabei höchstens so groß wie das auf das Exzenterrad 131 vom Zugmittelgetriebe 137 her übertragene Antriebsmoment. Es ist jedoch groß genug, um einer etwaigen selbsttätigen Verstellung des Exzenterrades 131 durch die Kraft des pleuelartigen Hubgliedes 128 im Betrieb entgegenzuwirken.

Bei einem nicht gezeigten Ausführungsbeispiel dieser Gattung kann die Hemmvorrichtung 151 so gestaltet sein, daß mindestens eine Umfangsfeder vorgesehen ist, die zwischen dem Exzenterrad 131 und der Exzenterwelle 141 eine Umfangsreibkraft erzeugt.

Beim gezeigten zweiten Ausführungsbeispiel ist statt einer Umfangsfeder eine axial wirkende Feder 166, insbesondere eine Wellenfeder, vorgesehen, die zwischen der Exzenterwelle 141 und dem Exzenterrad 131 in Axialrichtung eine Reibkraft erzeugt. Das Exzenterrad 131 schlägt in der einen Achsrichtung, das heißt in Fig. 5 nach rechts hin, an einem radialen Anschlag 167, z.B. einem Anschlagring, an, so daß das Exzenterrad 131 unter der Axialkraft der Feder 166 in dieser Richtung nicht ausweichen kann. Die axial wirkende Feder 166, insbesondere Wellenfeder, liegt auf einer Axialseite an einem Vorsprung 168, z.B. einer Schiebe, der Exzenterwelle 141 an. Auf der gegenüberliegenden Axialseite liegt die Feder 166 an einer zugewandten Fläche 169 des Exzenterrades 131 an. Die Feder 166 erzeugt somit zwischen dem Vorsprung 168 und der Fläche 169 eine axiale Druckkraft, die vorzugsweise über nicht weiter gezeigte axiale Einstellmittel z.B. zwischen dem Exzenterrad 131 und der Exzenterwelle 141 einstellbar sein kann.

Ähnlich dem ersten Ausführungsbeispiel weist die Hülse 135 des Exzenterrades 131 zwei in einem Umfangswinkelabstand von etwa 180° angeordnete Endanschläge 161, 162 auf, an denen bei der Drehverstellung der Exzenterwelle 141 in der einen bzw. gegensinnigen Richtung der eine Vorsprung 154 zur Begrenzung des Verstellwinkels auf etwa 180° anschlagen kann. Der Vorsprung 154 ist hier einstückiger Bestandteil der Exzenterwelle 141 und z.B. aus einer Nase, einem Nocken od.dgl. gebildet.

Beim zweiten Ausführungsbeispiel wird die von der Feder 166 erzeugte Axialkraft wieder in die Exzenterwelle 141 eingeleitet, weil diese vom Anschlag 167, an dem das Exzenterrad 131 axial abgestützt ist, aufgenommen wird. Es werden somit auch hier keine Axialkräfte auf das Getriebegehäuse 12 bzw. den Deckel 13 übertragen.

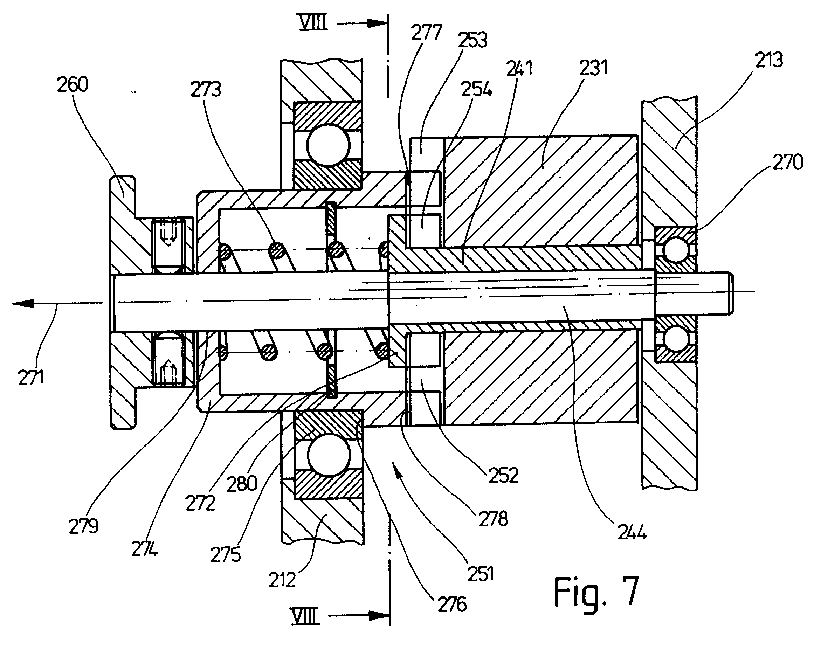

Bei dem in Fig. 7 bis 9 gezeigten dritten Ausführungsbeispiel sind aus den gleichen Gründen um 200 größere Bezugszeichen verwendet. Die grundsätzliche Anordnung entspricht etwa derjenigen in Fig. 1 bis 3, wobei jedoch Unterschiede hinsichtlich der Hemmvorrichtung 251 bestehen. Die Lagerachse 244 ist hier mit dem in Fig. 7 rechten Ende mittels eines Lagers 270 drehbar und im Lager 270 axial verschiebbar im Gehäuse, und zwar im Deckel 213, gelagert. Die Exzenterwelle 241 ist hier drehfest mit der Lagerachse 244 verbunden, und zwar so, daß sie auch bei einer axialen Verschiebebewegung der Lagerachse 244, z.B. in Richtung des Pfeiles 271, zusammen mit der Lagerachse 244 axial verschiebbar ist. Das auf der Exzenterwelle 241 befindliche Exzenterrad 231 ist hier nur schematisch angedeutet. Die Hemmvorrichtung 251 weist hier am Exzenterrad 231, und zwar an dessen in Fig. 7 linker Stirnseite, axial abstehende Stege 252 und Nuten 253 zwischen benachbarten Stegen 252 auf. In die Nuten 253 kann zumindest ein zugeordneter Vorsprung 254 z.B. an einer radialen Scheibe 272 der Exzenterwelle 241 formschlüssig eingreifen. Die Scheibe 272 kann natürlich auf der dem Exzenterrad 231 zugewandten Axialseite auch eine Vielzahl entsprechender Vorsprünge 254 aufweisen. Die Vorsprünge 254 sind so geformt und dimensioniert, daß sie in jeweils axial gegenüberliegende Nuten 253 des Exzenterrades 231 formschlüssig eingreifen können.

Die Exzenterwelle 241 ist mittels einer axial wirkenden Feder 273 mit ihrem mindestens einen axialen Vorsprung 254 in Eingriff mit einer zugeordneten Vertiefung, insbesondere Nut 253, des Exzenterrades 231 gehalten und dann, wenn an der Lagerachse 244, z.B. an einem daran festen Handgriff 260, in Pfeilrichtung 271 gezogen wird, gegen die Wirkung der Feder 273 außer Eingriff mit dem Exzenterrad 231 bringbar.

Die Feder 273 ist mit einem Ende an einem z.B. hülsenförmigen Widerlager 274 abgestützt. Das Widerlager 274 ist mittels eines Kugellagers 275 im Getriebegehäuse 212 gelagert und mit einem Ringabsatz 276 in Richtung des Pfeiles 271 formschlüssig gegen das Kugellager 275 gedrückt. Das z.B. hülsenförmige Widerlager 274 ist formschlüssig mit dem Exzenterrad 231 gekuppelt, z.B. mittels axial vorspringender Vorsprünge 277, 278, die in zugewandte Nuten 253 des Exzenterrades 231 formschlüssig eingreifen. Dadurch ist eine bleibende Relativposition in Umfangsrichtung zwischen dem Widerlager 274 und dem Exzenterrad 231 gesichert, so daß z.B. die dem Handgriff 260 zugewandte Stirnseite des Widerlagers 274 Bezugszeichen, z.B. eine Bezugsskala, tragen kann, die für die Einstellung des Pendelhubes als Bezugsskala dient.

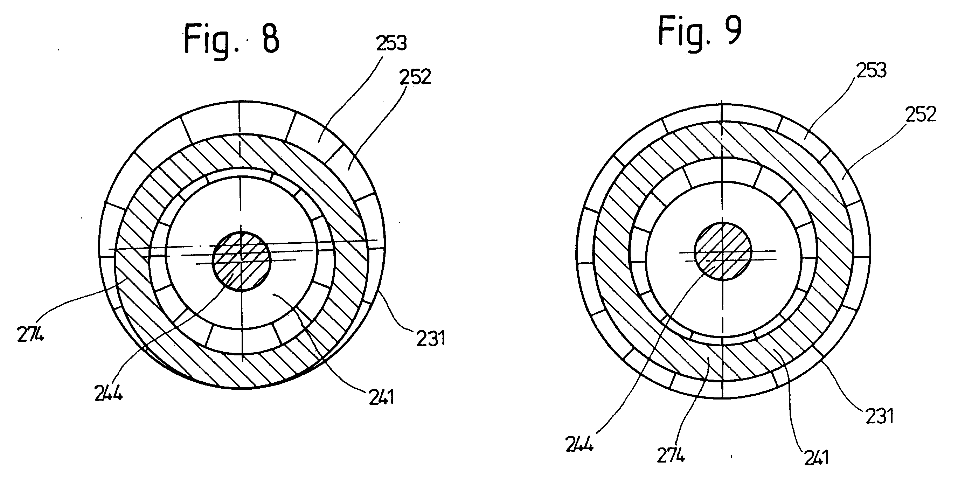

Die Lagerachse 244 durchsetzt das z.B. hülsenförmige Widerlager 274 und kann in einer davon durchsetzten Bohrung 279 ebenfalls gelagert sein. Die Lagerachse 244 ist aus dem Widerlager 274 axial herausgeführt und am herausragenden Ende mit dem Handgriff 260 versehen, der axial am Widerlager 274 anschlägt. Zur Verstellung des Hubes der nicht gezeigten Hubeinrichtung wird mittels des Handgriffes 260 die Lagerachse 244 mitsamt der Exzenterwelle 241 in Pfeilrichtung 271 gegen die Wirkung der Feder 273 axial herausgezogen, soweit, bis die Vorsprünge 254 der Exzenterwelle 241 außer Eingriff mit entsprechenden Nuten 253 des Exzenterrades 231 gelangen. Das Widerlager 274 verbleibt dabei in seiner Relativposition in bezug auf das Exzenterrad 231. Durch Drehverstellung der Exzenterwelle 241 ist eine Hubverstellung zwischen Nullhub (Fig. 9) und Maximalhub (Fig. 8) möglich. Die jeweilige Exzentrizität des Exzenterrades 231 und der Exzenterwelle 241 kann z.B. jeweils ein Viertel des Maximalhubes betragen. Dann ergibt sich ein Maximalhub gemäß Fig. 8, wenn der Achsversatz des Exzenterrades 231 und der Exzenterwelle 241 sich auf der gleichen Seite befinden, wie dies in Fig. 7 und 8 gezeigt ist. Bei einem Achsversatz auf gegenüberliegender Seite, den Fig. 9 zeigt, ergibt sich Hub Null. Dazwischen sind verschiedene Stellungen einstellbar.

Zur Begrenzung des axialen Verschiebeweges der Exzenterwelle 241 bei der beschriebenen Verstellung kann die Scheibe 272 an einem inneren Anschlag 280, z.B. einem Anschlagring, einer Anschlagschulter od.dgl., anschlagen. In Gegenrichtung ist eine Axialabstützung dadurch erreicht, daß die Lagerachse 244 mit einer Schulter am rechten Ende am Innenring des Lagers 270 anliegt.

Bei diesem dritten Ausführungsbeispiel ist keine Beschränkung der Drehverstellbarkeit in Umfangsrichtung vorgesehen.

In gleicher Weise können auch das erste und zweite Ausführungsbeispiel so abgeändert werden, daß die Begrenzung der Drehverstellbarkeit auf 180° entfällt und statt dessen eine Drehverstellbarkeit über 360° Umfangswinkel ermöglicht ist. Für diesen Fall erstrecken sich die Stege 52 und Nuten 53 in Fig. 1 bis 4 über 360° Umfangswinkel. Der Anschlag 59 in der Ausnehmung 58 sowie die Endanschläge 61 und 62 entfallen dann. Beim zweiten Ausführungsbeispiel in Fig. 5 und 6 entfallen dann der Vorsprung 154 und die Endanschläge 161,162.

## Patentansprüche

1. Handwerkzeugmaschine, insbesondere Handkreissäge, mit einem motorischen Antrieb für eine das Werkzeug, insbesondere das Sägeblatt (19), tragende Welle (18), die mittels einer daran angreifenden Hubeinrichtung (26) um eine zur Wellenachse im wesentlichen parallele Achse (23) pendelnd bewegbar ist, wobei die Hubeinrichtung (26) eine durch den motorischen Antrieb antreibbare Exzentervorrichtung (27) und ein von letzterer betätigtes, mit der Welle (18) gekoppeltes Hubglied (28) aufweist und das Hubglied (28) mit einer von der Drehzahl der Welle (18) verschiedenen Frequenz antreibt, dadurch gekennzeichnet,
daß ein Zugmittelgetriebe (37) den motorischen Antrieb mit der Exzentervorrichtung (27) verbindet, wobei der Hub des Hubgliedes (28; 128) zwischen einer Nullstellung, die einem Hub Null und einem abgeschalteten Pendelantrieb entspricht, und einer vorgegebenen Maximalstellung, die einem Maximalhub und einem auf maximalen Pendelwinkel zugeschalteten Pendelantrieb entspricht, in Stufen oder stufenlos einstellbar ist, wobei die jeweilige Exzentereinstellung der Exzentervorrichtung (27) kraftschlüssig und/oder formschlüssig sicherbar ist und wobei die Exzentervorrichtung (27) eine drehverstellbare Exzenterwelle (41, 141; 241) und auf der Exzenterwelle (41; 14; 241) ein das Hubglied (28; 128) antreibendes Exzenterrad (31; 131; 231) aufweist, dessen Außendurchmesser in bezug auf dessen Innendurchmesser einen radialen Achsversatz aufweist.

2. Handwerkzeugmaschine nach Anspruch 1, dadurch gekennzeichnet, daß das Zugmittelgetriebe (37) mit der Welle (18) getrieblich verbunden ist.

3. Handwerkzeugmaschine nach Anspruch 1 oder 2, dadurch gekennzeichnet, daß das Zugmittelgetriebe (37) aus einem Kettengetriebe oder einem Riemengetriebe (38) gebildet ist.

4. Handwerkzeugmaschine nach einem der Ansprüche 1 bis 3, dadurch gekennzeichnet, daß das als Riemengetriebe (38) ausgebildete Zugmittelgetriebe (37) einen Riemen (40), insbesondere Zahnriemen, aufweist.

5. Handwerkzeugmaschine nach einem der Ansprüche 1 bis 4, dadurch gekennzeichnet, daß auf der Welle (18) eine Riemenscheibe (39), insbesondere Zahnriemenscheibe, angeordnet ist, über die der Riemen (40), insbesondere Zahnriemen, antreibbar ist.

6. Handwerkzeugmaschine nach Anspruch 5, dadurch gekennzeichnet, daß die Riemenscheibe (39), insbesondere Zahnriemenscheibe, mit einem dem Wellenantrieb dienenden Zahnrad (17) der Welle (18) fest verbunden ist, insbesondere damit einstückig ist.

7. Handwerkzeugmaschine nach einem der Ansprüche 1 bis 6, dadurch gekennzeichnet, daß die Exzentervorrichtung (27) eine Riemenscheibe (36), insbesondere eine Zahnriemenscheibe, aufweist, die vom Riemen (40), insbesondere Zahnriemen, antreibbar ist.

8. Handwerkzeugmaschine nach Anspruch 7, dadurch gekennzeichnet, daß die Riemenscheibe (36), insbesondere Zahnriemenscheibe, mit der Exzentervorrichtung (27) fest verbunden ist, insbesondere damit einstückig ist.

9. Handwerkzeugmaschine nach einem der Ansprüche 1 bis 8, dadurch gekennzeichnet, daß die Exzentervorrichtung (27) ein Exzenterrad (31;131;231) aufweist, auf dem das Hubglied (28;128) mit einem Ende (33) drehbar gelagert ist.

10. Handwerkzeugmaschine nach Anspruch 9, dadurch gekennzeichnet, daß die Riemenscheibe (36), insbesondere Zahnriemenscheibe, mit dem Exzenterrad (31;131;231) einstückig ist.

11. Handwerkzeugmaschine nach einem der Ansprüche 1 bis 10, dadurch gekennzeichnet, daß die Exzentervorrichtung (27) zwischen einer Nullstellung und einer Maximalstellung in Stufen oder stufenlos verstellbar ausgebildet ist.

12. Handwerkzeugmaschine nach einem der Ansprüche 1 bis 11, dadurch gekennzeichnet, daß der Außendurchmesser der Exzenterwelle (41;141;241) in bezug auf deren Innendurchmesser einen radialen Achsversatz (Exzentrizität) aufweist.

13. Handwerkzeugmaschine nach Anspruch 12, dadurch gekennzeichnet, daß der Achsversatz des Außendurchmessers des Exzenterrades (31;131;231) in bezug auf dessen Innendurchmesser und/oder der Achsversatz des Außendurchmessers der Exzenterwelle (41;141;241) in bezug auf deren Innendurchmesser ein Viertel des Maximalhubes beträgt.

14. Handwerkzeugmaschine nach einem der Ansprüche 1 bis 13, gekennzeichnet durch eine zwischen der Exzenterwelle (41;141;241) und dem Exzenterrad (31;131;231) angeordnete, kraftschlüssig und/oder formschlüssig wirkende, zur Verstellung der Exzentrizität durch Relativbewegung zwischen der Exzenterwelle (41;141;241) und dem Exzenterrad (31;131;231) überwindbare Hemmvorrichtung (51:151;251).

15. Handwerkzeugmaschine nach Anspruch 14, dadurch gekennzeichnet, daß die Hemmvorrichtung (51;251) Vorsprünge (54,52;254,252) und Vertiefungen (53;253) aufweist, die formschlüssig ineinandergreifen.

16. Handwerkzeugmaschine nach Anspruch 15, dadurch gekennzeichnet, daß die Vorsprünge und Vertiefungen axial, z.B. stirnseitig, oder radial abstehende Stege (52;252)und Nuten (53;253) zwischen benachbarten Stegen (52;252), z.B. Zähne und dazwischen gebildete Zahnlücken, aufweisen.

17. Handwerkzeugmaschine nach einem der Ansprüche 1 bis 16, dadurch gekennzeichnet, daß das Exzenterrad (31) im Inneren einer Hülse (35) radial vorspringende und axial verlaufende Stege (52) und Nuten (53) zwischen benachbarten Stegen (52) aufweist.

18. Handwerkzeugmaschine nach Anspruch 17, dadurch gekennzeichnet, daß die Exzenterwelle (41;141) auf einem die Hülse (35;135) des Exzenterrades (31;131) durchsetzenden Bereich mindenstens einen radial überstehenden Vorsprung (54;154) aufweist, der in die Hülse (35;135) eingreift und zumindest zur Begrenzung des Verstellwinkels bei der Drehverstellung der Exzenterwelle (41;141) an hülsenseitigen Endanschlägen (61,62;161,162) angreift und/oder in zwischen Stegen (52) gebildete Nuten (53) der Hülse (35) eingreift.

19. Handwerkzeugmaschine nach Anspruch 18, dadurch gekennzeichnet, daß der Vorsprung (154) fester Bestandteil der Exzenterwelle (141) ist, insbesondere damit einstückig ist, oder daß der Vorsprung (54) aus einem in Radialrichtung nach außen federbelasteten (Feder 55), gegensinnig eindrückbaren und außer Eingriff mit einer Nut (53) bringbaren Rastglied (56), insbesondere einer Kugel (57), an der Exzenterwelle (41) gebildet ist.

20. Handwerkzeugmaschine nach Anspruch 19, dadurch gekennzeichnet, daß das Rastglied (56), insbesondere die Kugel (57), und deren Feder (55) in einer radialen Ausnehmung (58) der Exzenterwelle (41) gehalten ist.

21. Handwerkzeugmaschine nach Anspruch 20, dadurch gekennzeichnet, daß die radiale Ausnehmung (58) einen die Eindrücktiefe des Rastgliedes (56), insbesondere der Kugel (57), begrenzenden Anschlag (59) aufweist und vorzugsweise daß der Innendurchmesser der Hülse (35) auf dem Stege (52) enthaltenden Bereich zumindest geringfügig größer als auf dem übrigen, stegfreien Bereich gewählt ist.

22. Handwerkzeugmaschine nach einem der Ansprüche 17 bis 21, dadurch gekennzeichnet, daß die Hülse (35) des Exzenterrades (31) auf einem sich etwa über 180° oder bis 360° Umfangswinkel erstreckenden Umfangsbereich mit Stegen (52) und Nuten (53) versehen ist.

23. Handwerkzeugmaschine nach einem der Ansprüche 14 bis 22, dadurch gekennzeichnet, daß die Exzenterwelle (41; 141) mittels Drehung relativ zum Exzenterrad (31:131) unter Überwindung der Hemmvorrichtung (51;151) drehverstellbar ist.

24. Handwerkzeugmaschine nach einem der Ansprüche 1 bis 16, dadurch gekennzeichnet, daß das Exzenterrad (231) auf einer Stirnseite axial überstehende Stege (252) und Nuten (253) dazwischen aufweist, insbesondere Stirnzähne, in die zumindest ein zugeordneter, stirnseitiger Vorsprung (254), z.B. Stirnzahn, an einem radialen Träger, insbesondere einer Scheibe (272), der Exzenterwelle (241) formschlüssig eingreift.

25. Handwerkzeugmaschine nach Anspruch 24, dadurch gekennzeichnet, daß die Exzenterwelle (241) mittels einer axial wirkenden Feder (273) mit ihrem mindestens einen axialen Vorsprung (254) in Eingriff mit einer Nut (253) des Exzenterrades (231) gehalten und axial gegen die Wirkung der Feder (273) durch Abziehen außer Eingriff damit bringbar ist.

26. Handwerkzeugmaschine nach Anspruch 25, dadurch gekennzeichnet, daß die Feder (273) an einem insbesondere hülsenförmigen Widerlager (274) abgestützt ist, das mittels eines Lagers (275) drehbar im Gehäuse (212) gelagert ist und mittels der Feder (273) formschlüssig gegen das Lager (275) gedrückt ist.

27. Handwerkzeugmaschine nach Anspruch 26, dadurch gekennzeichnet, daß das insbesondere hülsenförmige Widerlager (274) vorzugsweise stirnseitig kraft- und/oder formschlüssig mit dem Exzenterrad (231) gekuppelt ist, insbesondere mittels mindestens eines in eine axial zugewandte Nut (253) des Exzenterrades (231) eingreifenden axialen Vorsprunges (277,278).

28. Handwerkzeugmaschine nach einem der Ansprüche 1 bis 27, dadurch gekennzeichnet, daß die Exzenterwelle (41; 141;241) auf einer Lagerachse (44;144:244) angeordnet ist, die ihrerseits zumindest mit einem Ende im Gehäuse (12,13;46) aufgenommen ist.

29. Handwerkzeugmaschine nach Anspruch 28, dadurch gekennzeichnet, daß die Lagerwelle (44;144) mit lediglich einem Ende fest im Gehäuse (13,46,47) gehalten ist, insbesondere in das Gehäuse eingepreßt ist, und von diesem mit einem Tragabschnitt (45;145) frei absteht und daß die Exzenterwelle (41;141) auf diesem Tragabschnitt (45;145) der Lagerachse (44;144) drehbar gelagert ist.

30. Handwerkzeugmaschine nach einem der Ansprüche 1 bis 30, dadurch gekennzeichnet, daß die Exzenterwelle (241) fest mit der Lagerachse (244) verbunden ist und die Lagerachse (244) ihrerseits mit einem Ende drehbar (Lager 270) und axial verschiebbar im Gehäuse (213) gelagert ist.

31. Handwerkzeugmaschine nach Anspruch 30, dadurch gekennzeichnet, daß die Lagerachse (244) das insbesondere hülsenförmige Widerlager (274) durchsetzt, aus diesem endseitig herausgeführt ist und an diesem herausgeführten Ende eine axial an dem Widerlager (274) anschlagende Handhabe (260) aufweist.

32. Handwerkzeugmaschine nach einem der Ansprüche 14 bis 29, dadurch gekennzeichnet, daß die Hemmvorrichtung (151) ein Reibmoment zwischen der Exzenterwelle (141) und dem Exzenterrad (131) erzeugt.

33. Handwerkzeugmaschine nach Anspruch 32, dadurch gekennzeichnet, daß das Reibmoment höchstens so groß wie das auf das Exzenterrad (131) übertragene Antriebsmoment ist.

34. Handwerkzeugmaschine nach Anspruch 32 oder 33, gekennzeichnet durch zumindest eine Umfangsfeder, die zwischen der Exzenterwelle und dem Exzenterrad eine Umfangsreibkraft erzeugt.

35. Handwerkzeugmaschine nach Anspruch 32 oder 33, gekennzeichnet durch zumindest eine axial wirkende Feder (166), z.B. Wellenfeder, die zwischen der Exzenterwelle (141) und dem Exzenterrad (131) in Axialrichtung eine Reibkraft erzeugt.

36. Handwerkzeugmaschine nach Anspruch 35, dadurch gekennzeichnet, daß das Exzenterrad (131) in einer Achsrichtung formschlüssig an der Exzenterwelle (141) anschlägt, z.B. mittels radialer Anschäge, insbesondere eines Anschlagringes (167), und daß die axial wirkende Feder (166) auf einer Axialseite an einem Vorsprung (168), z.B. einer Scheibe, der Exzenterwelle (141) und auf der anderen Axialseite an einer zugewandten Fläche (169) des Exzenterrades (131) anliegt und zwischen beiden eine, vorzugsweise einstellbare, axiale Druckkraft erzeugt.

37. Handwerkzeugmaschine nach einem der Ansprüche 14 bis 36, gekennzeichnet durch zwischen der Exzenterwelle (41,141) und dem von letzterer durchsetzten Exzenterrad (31;131) vorgesehene, insbesondere radiale,Anschlagmittel (54 bis 57,61,62;154,161,162) zur Begrenzung des Verstellwinkels bei der Drehverstellung der Exzenterwelle (41;141) auf eine Größe kleiner 360°, z.B. etwa 180°.

38. Handwerkzeugmaschine nach einem der Ansprüche 14 bis 37, gekennzeichnet durch zwei in einem Umfangswinkelabstand von etwa 180° am oder im Exzenterrad (31,131) angeordnete Endanschläge (61,62:161,162), an denen bei der Drehverstellung der Exzenterwelle (41;141) deren Vorsprung (54;154) in der einen bzw. gegensinnigen anderen Richtung anschlagen kann.

## Claims

1. Powered hand tool, in particular a portable circular saw, having a motor drive for a shaft (18) which carries the tool, in particular the saw blade (19), and is movable in a pendulous fashion about an axis (23) essentially parallel to the shaft axis by means of a stroke device (26) acting on the shaft (18), the stroke device (26) having an eccentric device (27), which can be driven by the motor drive, and a stroke member (28), which is actuated by the eccentric device (27) and is coupled to the shaft (18), and driving the stroke member (28) at a frequency which is different from the rotary speed of the shaft (18), characterized in that a flexible drive mechanism (37) connects the motor drive to the eccentric device (27), the stroke of the stroke member (28; 128) being adjustable in steps or in an infinitely variable manner between a zero position, which corresponds to a zero stroke and a switched-off pendulum drive, and a predetermined maximum position, which corresponds to a maximum stroke and a pendulum drive switched on to maximum pendulum angle, in which case the respective eccentric setting of the eccentric device (27) can be secured in a frictional and/or positive-locking manner, and the eccentric device (27) has a rotationally adjustable eccentric shaft (41, 141; 241) and, on the eccentric shaft (41; 141; 241), an eccentric wheel (31; 131, 231) which drives the stroke member (28; 128) and whose outside diameter has a radial axial offset with respect to its inside diameter.

2. Powered hand tool according to Claim 1, characterized in that the flexible drive mechanism (37) is in drive connection with the shaft (18).

3. Powered hand tool according to Claim 1 or 2, characterized in that the flexible drive mechanism (37) is formed from a chain drive mechanism or a belt drive mechanism (38).

4. Powered hand tool according to one of Claims 1 to 3, characterized in that the flexible drive mechanism (37) designed as a belt drive mechanism (38) has a belt (40), in particular a toothed belt.

5. Powered hand tool according to one of Claims 1 to 4, characterized in that a belt pulley (39), in particular a toothed-belt pulley, via which the belt (40), in particular a toothed belt, can be driven, is arranged on the shaft (18).

6. Powered hand tool according to Claim 5, characterized in that the belt pulley (39), in particular a toothed-belt pulley, is firmly connected to a gear wheel (17), serving the shaft drive, of the shaft (18), in particular is in one piece with said gear wheel (17).

7. Powered hand tool according to one of Claims 1 to 6, characterized in that the eccentric device (27) has a belt pulley (36), in particular a toothed-belt pulley, which can be driven by the belt (40), in particular a toothed belt.

8. Powered hand tool according to Claim 7, characterized in that the belt pulley (36), in particular a toothed-belt pulley, is firmly connected to the eccentric device (27), in particular is in one piece with the latter.

9. Powered hand tool according to one of Claims 1 to 8, characterized in that the eccentric device (27) has an eccentric wheel (31; 131; 231), on which the stroke member (28; 128) is rotatably mounted with one end (33).

10. Powered hand tool according to Claim 9, characterized in that the belt pulley (36), in particular a toothed-belt pulley, is in one piece with the eccentric wheel (31; 131; 231).

11. Powered hand tool according to one of Claims 1 to 10, characterized in that the eccentric device (27) is designed to be adjustable in steps or in an infinitely variable manner between a zero position and a maximum position.

12. Powered hand tool according to one of Claims 1 to 11, characterized in that the outside diameter of the eccentric shaft (41; 141; 241) has a radial axial offset (eccentricity) with respect to its inside diameter.

13. Powered hand tool according to Claim 12, characterized in that the axial offset of the outside diameter of the eccentric wheel (31; 131; 231) with respect to its inside diameter and/or the axial offset of the outside diameter of the eccentric shaft (41; 141; 241) with respect to its inside diameter is a quarter of the maximum stroke.

14. Powered hand tool according to one of Claims 1 to 13, characterized by an arresting device (51: 151; 251) which is arranged between the eccentric shaft (41; 141; 241) and the eccentric wheel (31; 131; 231), acts in a frictional and/or positive-locking manner, and can be overcome for the adjustment of the eccentricity by relative movement between the eccentric shaft (41; 141; 241) and the eccentric wheel (31; 131; 231).

15. Powered hand tool according to Claim 14, characterized in that the arresting device (51; 251) has projections (54, 52; 254, 252) and recesses (53; 253), which interengage in a positive-locking manner.

16. Powered hand tool according to Claim 15, characterized in that the projections and recesses have webs (52; 252), which project axially, e.g. at the end face, or radially, and grooves (53; 253) between adjacent webs (52; 252), e.g. teeth and tooth gaps formed in between.

17. Powered hand tool according to one of Claims 1 to 16, characterized in that the eccentric wheel (31), in the interior of a sleeve (35), has radially projecting and axially running webs (52) and grooves (53) between adjacent webs (52).

18. Powered hand tool according to Claim 17, characterized in that the eccentric shaft (41; 141), on a region passing through the sleeve (35; 135) of the eccentric wheel (31; 131), has at least one radial projection (54; 154), which engages in the sleeve (35; 135) and, at least for limiting the adjusting angle during the rotary adjustment of the eccentric shaft (41; 141), acts on sleeve-side end stops (61, 62; 161, 162) and/or engages in grooves (53) of the sleeve (35), which are formed between webs (52).

19. Powered hand tool according to Claim 18, characterized in that the projection (154) is a fixed component of the eccentric shaft (141), in particular is in one piece with the latter, or in that the projection (54) is formed from a catch member (56), in particular a ball (57), on the eccentric shaft (41), which catch member (56) is spring-loaded outwards in the radial direction (spring 55), can be pressed in in the opposite direction and can be disengaged from a groove (53).

20. Powered hand tool according to Claim 19, characterized in that the catch member (56), in particular the ball (57), and its spring (55) are held in a radial recessed portion (58) of the eccentric shaft (41).

21. Powered hand tool according to Claim 20, characterized in that the radial recessed portion (58) has a stop (59) which limits the press-in depth of the catch member (56), in particular the ball (57), and preferably in that the inside diameter of the sleeve (35), on the region containing webs (52), is selected to be at least slightly larger than the remaining, web-free region.

22. Powered hand tool according to one of Claims 17 to 21, characterized in that the sleeve (35) of the eccentric wheel (31) is provided with webs (52) and grooves (53) on a circumferential region which extends approximately over a circumferential angle of 180° or up to 360°.

23. Powered hand tool according to one of Claims 14 to 22, characterized in that the eccentric shaft (41; 141) is rotationally adjustable by means of rotation relative to the eccentric wheel (31: 131) while overcoming the arresting device (51; 151).

24. Powered hand tool according to one of Claims 1 to 16, characterized in that the eccentric wheel (231), on one end face, has axially projecting webs (252) and grooves (253) in between, in particular end teeth, in which at least one assigned, end-face projection (254), e.g. an end tooth, on a radial carrier, in particular a disc (272), of the eccentric shaft (241) engages in a positive-locking manner.

25. Powered hand tool according to Claim 24, characterized in that the eccentric shaft (241), with its at least one axial projection (254), is held in engagement with a groove (253) of the eccentric wheel (231) by means of an axially acting spring (273) and, by pulling off, can be disengaged from the groove (253) axially against the action of the spring (273).

26. Powered hand tool according to Claim 25, characterized in that the spring (273) is supported on an, in particular sleeve-shaped, abutment (274), which is rotatably mounted in the housing (212) by means of a bearing (275) and is pressed in a positive-locking manner against the bearing (275) by means of the spring (273).

27. Powered hand tool according to Claim 26, characterized in that the, in particular sleeve-shaped, abutment (274) is coupled, preferably at an end face, to the eccentric wheel (231) in a frictional and/or positive-locking manner, in particular by means of at least one axial projection (277, 278) engaging in an axially facing groove (253) of the eccentric wheel (231).

28. Powered hand tool according to one of Claims 1 to 27, characterized in that the eccentric shaft (41; 141; 241) is arranged on a bearing spindle (44; 144: 244), which in turn is accommodated with at least one end in the housing (12, 13; 46).

29. Powered hand tool according to Claim 28, characterized in that the bearing shaft (44; 144) is firmly held with only one end in the housing (13, 46, 47), in particular is pressed into the housing, and freely projects from the latter with a supporting section (45; 145), and in that the eccentric shaft (41; 141) is rotatably mounted on this supporting section (45; 145) of the bearing spindle (44; 144).

30. Powered hand tool according to one of Claims 1 to 30, characterized in that the eccentric shaft (241) is firmly connected to the bearing spindle (244), and the bearing spindle (244) in turn is mounted with one end in the housing (213) in a rotatable manner (bearing 270) and in an axially displaceable manner.

31. Powered hand tool according to Claim 30, characterized in that the bearing spindle (244) passes through the, in particular sleeve-shaped, abutment (274), is led out of the latter at the end and, at this end which is led out, has a handle (260) which runs axially against the abutment (274).

32. Powered hand tool according to one of Claims 14 to 29, characterized in that the arresting device (151) produces a friction moment between the eccentric shaft (141) and the eccentric wheel (131).

33. Powered hand tool according to Claim 32, characterized in that the friction moment is at most as large as the drive moment transmitted to the eccentric wheel (131).

34. Powered hand tool according to Claim 32 or 33, characterized by at least one circumferential spring, which produces a circumferential friction force between the eccentric shaft and the eccentric wheel.

35. Powered hand tool according to Claim 32 or 33, characterized by at least one axially acting spring (166), e.g. a corrugated spring, which produces a friction force in the axial direction between the eccentric shaft (141) and the eccentric wheel (131).

36. Powered hand tool according to Claim 35, characterized in that the eccentric wheel (131) runs against the eccentric shaft (141) in a positive-locking manner in an axial direction, e.g. by means of radial stops, in particular of a stop ring (167), and in that the axially acting spring (166), on one axial side, bears against a projection (168), e.g. a disc, of the eccentric shaft (141) and, on the other axial side, bears against a facing surface (169) of the eccentric wheel (131) and produces between the two a, preferably adjustable, axial thrust.

37. Powered hand tool according to one of Claims 14 to 36, characterized by, in particular radial, stop means (54 to 57, 61, 62; 154, 161, 162) which are provided between the eccentric shaft (41, 141) and the eccentric wheel (31; 131) through which the latter passes and are intended for limiting the adjusting angle during the rotary adjustment of the eccentric shaft (41; 141) to a size less than 360°, e.g. about 180°.

38. Powered hand tool according to one of Claims 14 to 37, characterized by two end stops (61, 62: 161, 162) which are arranged on or in the eccentric wheel (31, 131) at a circumferential angular distance of about 180° and against which, during the rotary adjustment of the eccentric shaft (41; 141), the projection (54; 154) of the latter can run in the one direction or in the other, opposite direction.

## Revendications

1. Machine-outil à main, notamment scie circulaire à main comportant un moteur pour un arbre (18) portant l'outil notamment le disque de scie (19), cet arbre étant déplacé suivant le mouvement pendulaire par une installation de translation (26) agissant sur l'arbre, autour d'un axe (23) essentiellement parallèle à l'axe de l'arbre, l'installation de translation (26) comportant un dispositif à excentrique (27) entraîné par le moteur et un élément de translation (28) actionné par le dispositif et couplé à l'arbre (18), pour entraîner l'élément de translation (28) à une fréquence différente de la vitesse de rotation de l'arbre (18),
caractérisée en ce que
• une transmission à moyen de traction (37) relie le moteur au dispositif à excentrique (27), la course de l'élément de translation (28, 128) étant réglable par échelon ou en continu, entre une position nulle qui correspond à un déplacement nul et sans mouvement pendulaire et une position maximale prédéterminée correspondant à une course maximale et à un entraînement pendulaire pour un angle pendulaire maximum,
• le réglage excentré respectif du dispositif à excentrique (27) pouvant être fixé par une liaison par la force et/ou par la forme et le dispositif à excentrique (27) comprenant l'arbre excentrique (41, 141, 241) réglable en rotation et cet arbre excentrique (41, 141, 241) porte une roue excentrique (31, 131, 231) entraînant l'élément de translation (28, 128), le diamètre de la roue excentrique ayant un décalage radial d'axe par rapport à son diamètre intérieur.

2. Machine-outil à main selon la revendication 1, caractérisée en ce que la transmission à moyen de traction (37) coopère avec l'arbre (18).

3. Machine-outil à main selon la revendication 1 ou 2, caractérisée en ce que
la transmission à moyen de traction (37) est formée d'une transmission à chaîne ou d'une transmission à courroie (38).

4. Machine-outil à main selon l'une des revendications 1 à 3,
caractérisée en ce que
la transmission à moyen de traction (37) est en forme de transmission à courroie (38) comprenant une courroie (40) notamment une courroie crantée.

5. Machine-outil à main selon l'une quelconque des revendications 1 à 4,
caractérisée en ce que
l'arbre (18) porte une poulie à courroie (39) notamment une poulie à courroie crantée qui entraîne la courroie (40) notamment la courroie crantée.

6. Machine-outil à main selon la revendication 5,
caractérisée en ce que
la poulie à courroie (39) notamment la poulie à courroie crantée est solidaire d'une roue dentée (17) de l'arbre (18) servant à entraînement de l'arbre et qui notamment fait corps avec celui-ci.

7. Machine-outil à main selon l'une quelconque des revendications 1 à 6,
caractérisée en ce que
le dispositif à excentrique (27) comprend une poulie à courroie (36) notamment une poulie à courroie crantée entraînée par la courroie (40) notamment une courroie crantée.

8. Machine-outil à main selon la revendication 7,
caractérisée en ce que
la poulie à courroie (36) notamment la poulie à courroie crantée est solidaire du dispositif à excentrique (27) et notamment fait corps avec celui-ci.

9. Machine-outil à main selon l'une quelconque des revendications 1 à 8,
caractérisée en ce que
le dispositif à excentrique (27) comporte une roue excentrique (31, 131, 231) sur laquelle l'élément de translation (28, 128) est monté en rotation par une extrémité (33).

10. Machine-outil à main selon la revendication 9,
caractérisée en ce que
la poulie à courroie (36) notamment la poulie à courroie crantée fait corps avec la roue excentrique (31, 131, 231).

11. Machine-outil à main selon l'une des revendications 1 à 10,
caractérisée en ce que
le dispositif à excentrique (27) est réglable par palier ou en continu entre une position nulle et une position maximale.

12. Machine-outil à main selon l'une des revendications 1 à 11,
caractérisée en ce que
le diamètre extérieur de l'arbre excentrique (41, 141, 241) présente un décalage d'axe, radial (excentricité) par rapport à son diamètre intérieur.

13. Machine-outil à main selon la revendication 12,
caractérisée en ce que
le décalage d'axe du diamètre extérieur de la roue excentrique (31, 131, 231) représente par rapport à son diamètre intérieur et/ou le décalage d'axe du diamètre extérieur de l'arbre excentrique (41, 141, 241) représente par rapport à son diamètre intérieur un quart de la course maximale.

14. Machine-outil à main selon l'une des revendications 1 à 13,
caractérisée par
un dispositif de retenue (51, 151, 251) prévu entre l'arbre excentrique (41, 141, 241) et la roue excentrique (31, 131, 231), agissant par une liaison par la force et/ou par la forme pour régler l'excentricité par le mouvement relatif entre l'arbre excentrique (41, 141, 241) et la roue excentrique (31, 131, 231) et qu'il faut vaincre.

15. Machine-outil à main selon la revendication 14,
caractérisée en ce que
le dispositif de retenue (51, 251) comporte des parties en saillie (54, 52, 254,252) et des cavités (53, 253) qui s'interpénètrent par une liaison par la forme.

16. Machine-outil à main selon la revendication 15,
caractérisée en ce que
les parties en saillie et les cavités comporte des nervures (52, 252) axiales par exemple dépassant par la face frontale ou radialement et des rainures (53, 253) entre les nervures voisines (52, 252) par exemple des intervalles entre des dents.

17. Machine-outil à main selon l'une des revendications 1 à 16,
caractérisée en ce que
la roue excentrique (31) comporte à l'intérieur d'un manchon (35), des nervures (52) axiales, venant radialement en saillie et des rainures (53) entre les nervures voisines (52).

18. Machine-outil à main selon la revendication 17,
caractérisée en ce que
la roue excentrique (41, 141) comporte sur une zone traversant le manchon (35, 135) de la roue excentrique (31, 131), au moins une partie en saillie (54, 154) dépassant radialement, et qui vient prendre dans le manchon (35, 135) et au moins pour limiter l'angle de réglage pour la position de réglage de l'arbre excentrique (41, 141) il agit contre des butées de fin de course (61, 62, 161, 162) du côté du manchon et/ou des rainures (53) formées entre les nervures (52) du manchon (35).

19. Machine-outil à main selon la revendication 18,
caractérisée en ce que
la partie en saillie (154) fait partie de l'arbre excentrique (141) et notamment est réalisée en une seule pièce avec celui-ci ou encore la partie en saillie (54) est formée par un élément d'encliquetage (56), chargé par un ressort (ressort 55) dirigé radialement vers l'extérieur, et qui peut être enfoncé dans la direction opposée et être mis hors de prise d'une rainure (53), notamment une bille (57) sur l'arbre excentrique (41).

20. Machine-outil à main selon la revendication 19,
caractérisée en ce que
l'élément d'encliquetage (56) notamment la bille (57) et son ressort (55) sont tenus dans une cavité radiale (58) de l'arbre excentrique (41).

21. Machine-outil à main selon la revendication 20, caractérisée en ce que
• la cavité radiale (58) comporte une butée (59) limitant la profondeur d'enfoncement de l'élément d'encliquetage (56) notamment la bille (57), et
• de préférence le diamètre intérieur du manchon (35) dans la zone munie de la nervure (52) est au moins légèrement supérieur à celui de la partie restante ne comportant pas de nervure.

22. Machine-outil à main selon l'une des revendications 17 à 21,
caractérisée en ce que
le manchon (35) de la roue excentrique (31) est muni de nervures (52) et de rainures (53) sur une zone périphérique s'étendant sur un angle périphérique supérieur à 180° ou allant jusqu'à 360°.

23. Machine-outil à main selon l'une des revendications 14 à 22,
caractérisée en ce que
l'arbre excentrique (41, 141) est réglable en rotation par rapport à la roue excentrique (31, 131) en dépassant le dispositif de retenue (51, 151).

24. Machine-outil à main selon l'une des revendications 1 à 16,
caractérisée en ce que
la roue excentrique (231) comporte sur une face frontale, des nervures (252) dépassant axialement et des rainures (253) entre les nervures, notamment des dents frontales et au moins une partie en saillie (254), frontale comme une dent frontale, associée, prévue sur un support radial, notamment un disque (272) de l'arbre excentrique (241) pénètre par une liaison par la forme.

25. Machine-outil à main selon la revendication 24,
caractérisée en ce que
l'arbre excentrique (241) est tenu par un ressort axial (273) avec au moins une saillie axiale (254) en prise avec une rainure (253) de la roue excentrique (231) et peut être mis hors de prise, en tirant, axialement contre l'action du ressort (273).

26. Machine-outil à main selon la revendication 25,
caractérisée en ce que
le ressort (273) s'appuie contre un appui (274) notamment en forme de manchon qui est monté par un palier (275) à rotation dans le boîtier (212) et peut être pressé par le ressort (273) par une liaison par la forme contre le palier (275).

27. Machine-outil à main selon la revendication 26,
caractérisée en ce qu'
en particulier l'appui (274) en forme de manchon est couplé de préférence du côté frontal par une liaison par la force et/ou la forme avec la roue excentrique (231), notamment à l'aide d'au moins une saillie (277, 278) venant dans une rainure (253) axiale de la roue excentrique (231).

28. Machine-outil à main selon l'une des revendication 1 à 27,
caractérisée en ce que
l'arbre excentrique (41, 141, 241) est prévu sur un axe de palier (44, 144, 244) lui-même reçu par une extrémité dans le boîtier (12, 13, 46).

29. Machine-outil à main selon la revendication 28,
caractérisée en ce que
l'arbre de palier (44, 144) est tenu uniquement par une extrémité, solidement dans le boîtier (13, 46, 47) notamment frété dans le boîtier et dépasse de celui-ci par un segment de support (45, 145), et l'arbre excentrique (41, 141) est monté sur ce segment de support (45, 145) de l'axe de palier (44, 144) de manière à tourner.

30. Machine-outil à main selon l'une des revendications 1 à 29,
caractérisée en ce que
l'arbre excentrique (241) est relié solidairement à l'axe de palier (244) et cet axe (244) est monté lui-même à rotation par une extrémité (palier 270) et de manière coulissante axialement dans le boîtier (213).

31. Machine-outil à main selon la revendication 29,
caractérisée en ce que
l'axe de palier (244) traverse notamment l'appui (274) en forme de manchon et en sort par une extrémité et cette extrémité qui dépasse comporte une poignée (260) butant axialement contre l'appui (274).

32. Machine-outil à main selon l'une des revendications 14 à 29,
caractérisée en ce que
le dispositif de retenue (151) crée un couple de frottement entre l'arbre excentrique (141) et la roue excentrique (131).

33. Machine-outil à main selon la revendication 32,
caractérisée en ce que
le couple de frottement est au plus égal au couple d'entraînement transmis à la roue excentrique (131).

34. Machine-outil à main selon l'une des revendications 32 ou 33,
caractérisée par
au moins un ressort périphérique créant une force de frottement périphérique entre l'arbre excentrique et la roue à excentrique.

35. Machine-outil à main selon l'une des revendications 32 ou 33,
caractérisée par
au moins un ressort (166) agissant axialement par exemple un ressort à ondulations créant une force de frottement dans la direction axiale entre l'arbre excentrique (141) et la roue excentrique (131).

36. Machine-outil à main selon la revendication 35,
caractérisée en ce que
la roue excentrique (131) vient buter par une liaison de forme dans la direction axiale contre l'arbre excentrique (141), par exemple par des butées radiales notamment une bague de butée (167) et le ressort agissant axialement s'appuie contre un côté axial d'une partie en saillie (168) par exemple une rondelle de l'arbre excentrique (141) et de l'autre côté axial contre une surface correspondante (169) de la roue excentrique (131) et entre les deux on génère une force de pression axiale de préférence réglable.

37. Machine-outil à main selon l'une des revendications 14 à 36,
caractérisée en ce qu'
entre l'arbre excentrique (41, 141) et la roue excentrique (31, 131) traversée par cet arbre, il y a notamment des butées radiales (54-57, 61, 62 ; 154, 161, 162) pour limiter l'angle de réglage pour un réglage en rotation de l'arbre excentrique (41, 141) à une amplitude inférieure à 360° par exemple de l'ordre de 180°.

38. Machine-outil à main selon l'une des revendications 14 à 37,
caractérisée par
deux butées de fin de course (61, 62, 161, 162) prévues à une distance d'angle périphérique d'environ 180° ou dans la roue excentrique (31, 131), butées contre lesquelles pour la position de rotation de l'arbre excentrique (41, 141), la partie en saillie (54, 154) peut s'appuyer dans une direction ou dans la direction opposée.
